## Europäisches Patentamt
## European Patent Office
## Office européen des brevets

(19)

(11) Publication number: **0 111 479**
**B1**

(12)

# EUROPEAN PATENT SPECIFICATION

(45) Date of publication of patent specification: **21.12.88**

(51) Int. Cl.⁴: **B 60 H 1/00, B 60 R 1/06**

(21) Application number: **82902278.9**

(22) Date of filing: **01.06.82**

(86) International application number:
**PCT/US82/00758**

(87) International publication number:
**WO 83/04225 08.12.83 Gazette 83/28**

(54) MULTIFUNCTION SAIL MIRROR.

(43) Date of publication of application:
**27.06.84 Bulletin 84/26**

(45) Publication of the grant of the patent:
**21.12.88 Bulletin 88/51**

(84) Designated Contracting States:
**DE FR GB**

(56) References cited:
**WO-A-81/01269**
**AU-B- 59 052**
**CA-A- 537 190**
**DE-A-2 024 793**
**DE-A-3 002 134**
**US-A-3 859 899**

(73) Proprietor: **FORD MOTOR COMPANY LIMITED
Eagle Way
Brentwood Essex CM13 3BW (GB)**
(84) **GB**

(73) Proprietor: **FORD-WERKE
AKTIENGESELLSCHAFT
Ottoplatz 2 Postfach 21 03 69
D-5000 Köln 21 (DE)**
(84) **DE**

(73) Proprietor: **FORD FRANCE SOCIETE ANONYME
344 Avenue Napoléon Bonaparte B.P. 307
F-92506 Rueil Malmaison Cedex (FR)**
(84) **FR**

(72) Inventor: **GEBHARD, Harold C.
33111 Granada Avenue
Livonia, MI 48154 (US)**

(74) Representative: **Messulam, Alec Moses et al
A. Messulam & Co. 24 Broadway
Leigh on Sea Essex SS9 1BN (GB)**

Courier Press, Leamington Spa, England.

## Description

The present invention relates generally to outside rearview mirrors for automobiles and more specifically to a mirror of this type which is operatively connected to the heating and ventilating system of the automobile to directionally control air flow.

It is well known by designers of automobiles that the formation of water condensation on outside rearview mirrors and side windows is an undesirable phenomenon that causes inconvenience to drivers who must clear these surfaces to insure good visibility. It is also known that providing a ventilation path through the front edge of the vehicle's front doors as is conventionally accomplished with so-called vent windows is desirable in certain vehicles, particularly when air conditioning is not used.

The response of the automotive industry to provide components which will automatically remove condensation from one or the other of the mentioned glass surfaces or will provide a door ventilation path is well known. For example, U.S. patents 3,522,584 to Talbot; 3,859,899 to Mills; and 3,877,780 to Taylor disclose outside rearview mirrors which accomplish clearing of the mirror by passing heated passenger compartment air through it. That passing heated air over inside glass surfaces on which condensation may form is known is exemplified by U.S. Patent 2,150,110 to Strauss et al. Lacking in the prior art, however, is teaching of the economical combination of any of these desirable functions in a single component assembly.

DE-A-3,002,134 relates to a mirror assembly of a motor vehicle including a housing carrying a mirror and attached to an outside surface of the vehicle body 5 adjacent a side window thereof and conduit means between the space adjacent the interior surface of the side window and the interior of the housing for heating the mirror.

According to the invention there is provided an automotive vehicle having a body enclosing a passenger compartment, a system for heating the passenger compartment, a sail mirror assembly having a housing carrying a mirror and attached to an outside surface of the vehicle body adjacent a side window thereof and conduit means interconnecting the vehicle heating system and the interior of the mirror housing characterised in that door means are disposed intermediate the heating system and the mirror housing operative in one position to provide communication between the conduit means and the interior of the housing and in another position to block communication therebetween and to provide communication between the conduit means and the interior surface of the side window.

The invention will now be further described by way of example with reference to the accompanying drawings in which:

Figure 1 is a perspective view of the sail mirror assembly of the present invention installed in an automobile in which the mirror defrosting mode of operation is illustrated.

Figure 2 is a perspective view of the sail mirror assembly of the present invention installed in an automobile in which the side window defrosting mode of operation is illustrated.

Figure 3 is a perspective view of the sail mirror assembly of the present invention installed in an automobile in which the air extraction mode of operation is illustrated.

Figure 4 is a perspective view of the sail mirror assembly of the present invention installed in an automobile in which the air induction mode of operation is illustrated.

Fig. 5 is an exploded rear perspective view of the invention sail mirror assembly with certain parts removed for clarity;

Fig. 6 is a rear perspective view of the invention sail mirror assembly;

Fig. 7 is a cross-sectional view taken along line 7-7 of Fig. 6; and

Fig. 8 is a horizontal cross-sectional view of the invention sail mirror assembly.

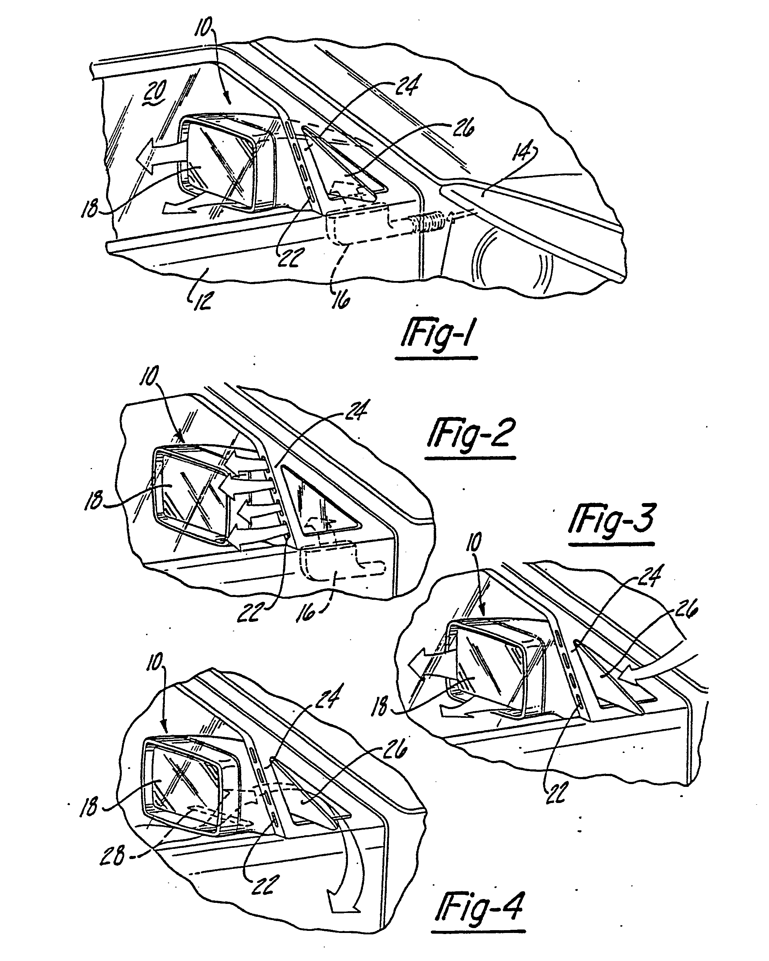

Turning now to the drawings, and in particular to Figures 1-4, a sail mirror assembly 10 is illustrated as being assembled to a door 12 of an automobile vehicle body 14 adjacent the leading edge of the door near the lower front corner of the side window known as the sail area because of its sail-like shape.

Figures 1-4 illustrate four functions performed by the sail mirror assembly 10 of the present invention. In Figure 1 a mirror defrosting mode of operation is illustrated. Heated air from the heating system of the vehicle (not shown) is ported to the sail mirror assembly 10 through a known flexible conduit 16. The heated air flows in the direction of the arrows of Figure 1 to enter the body of the sail mirror assembly 10, as will be described in more detail to follow, and exits around the periphery of the mirror 18 of sail mirror assembly 10.

In Figure 2 a side window defrosting mode of operation is illustrated. In this mode of operation heated air is again passed through the flexible duct 16 and is passed along the surface of the side window glass 20 through slots 22 formed in a portion of the vehicle door 12, such as the substantially vertical division bar 24.

In Figure 3 an air extraction mode of operation is illustrated. In this mode of operation no use is made of heated air, but a pivotally mounted door assembly 26 is opened to provide communication between the body of the sail mirror assembly 10 and the interior of the vehicle body. Reduced air pressure created adjacent the periphery of the mirror 18 during forward motion of the vehicle promotes the flow of air from the vehicle passenger compartment to the exterior around the periphery of the mirror 18.

Figure 4 illustrates a ventilation mode of operation in which fresh air from outside the vehicle is introduced into the vehicle passenger compartment through the body of the sail mirror 10. In this mode of operation a slot, shown in dotted line at 28, is opened to the outside by means to be later described in detail, and air is passed in the direction of the arrows through the body of the sail mirror and through the pivotally mounted door 26 to the interior of the vehicle passenger compartment.

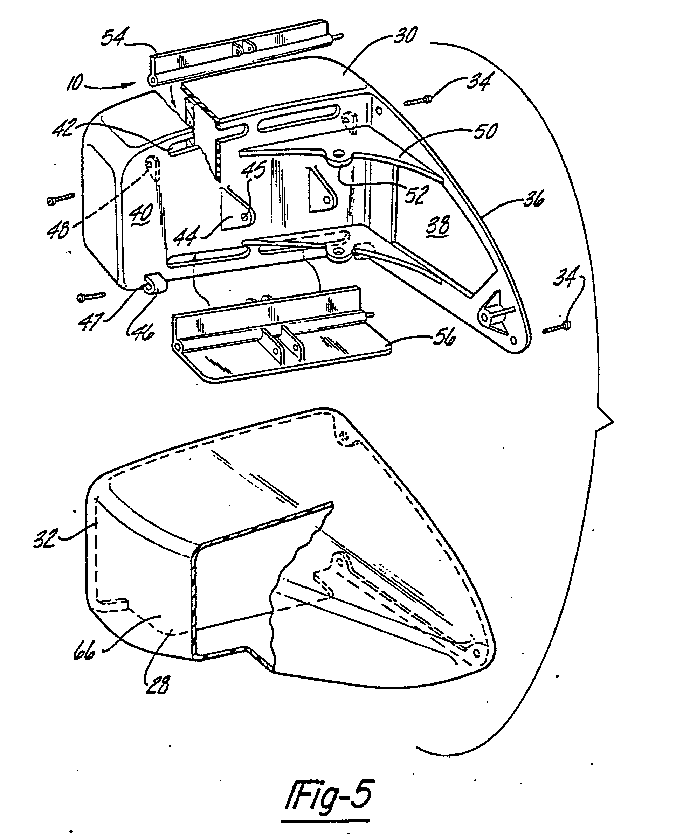

Turning now to Figures 5-8 of the drawing, the advantageous construction of the sail mirror of the present invention can be appreciated. As can best be seen in Figure 5, the sail mirror assembly 10 includes a body portion 30 and a cover portion 32 which may be conventionally secured thereto by fasteners, such as screws indicated at 34. The body 30 is illustrated as including an attaching portion 36 configured to abuttingly engage a portion of the vehicle door 12 to which it may be secured by suitable fastening means. A generally triangularly shaped aperture 38 is formed through the attaching portion 36 to register with the door 26. Extending generally perpendicularly outwardly from the attaching portion 36 is an inner wall 40. Perforations, such as the elongated slots indicated at 42, are formed through the wall 40 to permit the passage of air therethrough around the periphery of the mirror 18. A pair of spaced inwardly extending mounting bosses 44 having axially aligned apertures 45 are formed on the inner surface of inner wall 40. Likewise extending inwardly from the inner face of wall 40 are a pair of mounting ears having aligned apertures 47. A similar pair of spaced apertured mounting ears 48 extend outwardly from the front face of the inner wall 40, as is indicated in dotted line in Figure 5. A pair of vertically spaced generally triangular braces 50 join the attached portion 36 and inner wall 40. Apertured ears 52, which are arranged in axial alignment, extend generally inwardly from these braces.

Also shown in the exploded view of Figure 5 is an upper door or flap 54 which is pivotally mounted between the ears 48 and a lower door or flap 56 which is pivotally mounted between the ears 46. The upper door 54 mounting is effected in close relationship with the upper pair of slots 42 while the mounting of the lower door 56 is in close relationship with the lower pair of slots 42 formed through the inner wall 40. The upper door 54, as best may be seen in Figure 7, includes a flat closure portion 58 engageable with the outer surface 60 of the inner wall 40 to effect closure of the upper pair of slots 42. The lower door 56 similarly has a flat portion 62 engageable with the surface 60 for closing the lower pair of ports 42. The lower door 56 further includes an outer door portion (external door) 64 extending outwardly from the pivotal axis defined by mounting ears 46 in the direction opposite that of the sealing portion 62. This outer door portion 64 is operative in one position shown in dotted line in Figure 7 to close the aperture 28 formed in the cover 32 at a position spaced inwardly from the wall 40.

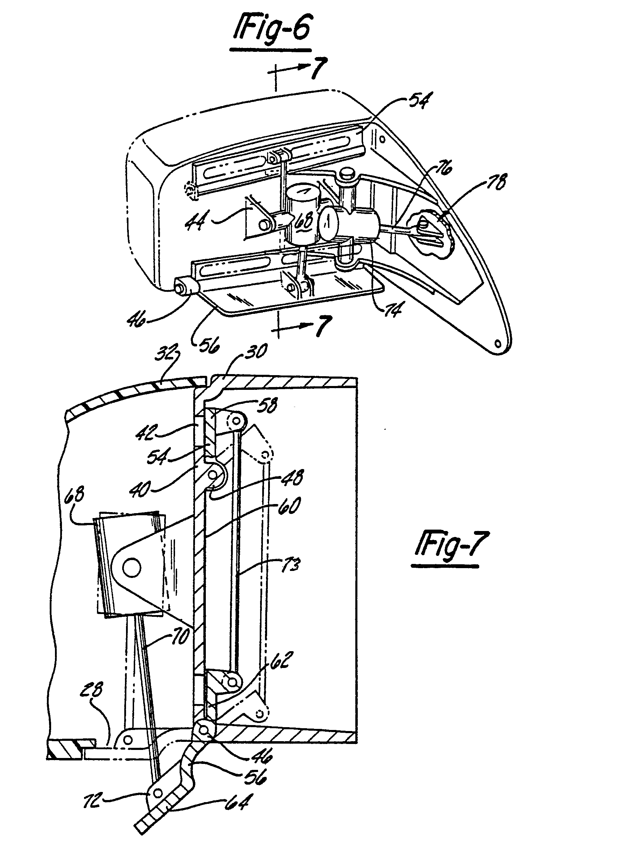

As may best be seen in Figures 6 and 7, the mounting and operation of the doors 26, 54 and 56, 64 can be appreciated. A known drive motor 68 is trunion mounted in the support braces 44 and includes a linearly displaceable output actuating rod 70 which is pivotally mounted, as indicated at 72, to the external door 64. A pivotally mounted cross link 73 between upper door 54 and lower door 56 effects simultaneous movement of the two doors. As best can be appreciated from the two-position drawing of Figure 7, movement tending to open the outside door 64, as shown in solid line of Figure 7, effects closure of the slots 42 through operation of upper and lower doors 54, 56. Conversely, movement to the dotted line position of Figure 7, wherein the aperture 28 of cover member 32 is closed by outside door 64, effects movement of upper and lower doors 54, 56 to the position opening slots 42.

A second known drive motor 74 is trunion mounted between the ears 52 of braces 50 and includes a linear actuating rod 76 which is pivotally mounted to the sail door assembly 26, as indicated at 78.

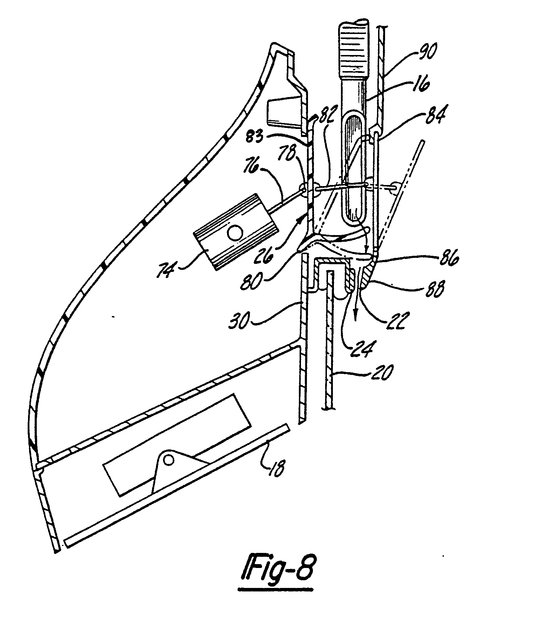

Turning now to Figure 8, the sail door assembly 26 is shown to be configured to include a generally "L"-shaped member attached through a hinge 80 to the body 30. A cross link 83 pivotally connected to one side of the L-shaped member 83 is similarly pivotally connected to an inner door 84 through which direct communication to the vehicle passenger compartment is effected. The inner door 84 is hinged at 86 and includes a hinge body portion 88 through which the ducts 22 are formed adjacent the side glass 20. Closure of the inner door 84 is effected through engagement with a sealing portion 90 of the vehicle body. As can be seen from Figure 8, movement between the solid line closed position and the dotted line open position of the doors 83, 84 effects directional control of air between the position wherein communication is established between the duct 16 and the slots 22 and the position wherein communication is effected between the duct 16 and the interior of the body 30 while slots 22 are closed.

It will be clear from the foregoing that the mirror defrosting mode of Fig. 1 is effected when the vehicle heating system is on and the door assembly 26 is positioned as shown in dotted line in Fig. 8 while the external door 64 is closed and the upper and lower slots 42 are opened. Movement of the door assembly 26 from this position to the solid line position of Fig. 8 effects the side window defrosting mode of Fig. 2. The air extraction mode of Fig. 3 is effected by opening the door assembly 26 to the passenger compartment while the external door 64 is closed; and the ventilation mode of Fig. 4 is effected through opening both the door assembly 26 and the external door 64.

While only one embodiment of the invention sail mirror assembly 10 has been described, those skilled in the art will appreciate that others are possible without departing from the scope of the appended claims.

INDUSTRIAL APPLICABILITY

The present invention finds its best use as a sail mirror assembly for automotive vehicles.

## Claims

1. An automotive vehicle having a body enclosing a passenger compartment, a system for heating the passenger compartment, a sail mirror assembly (10) having a housing (30,32) carrying a mirror (18) and attached to an outside surface of the vehicle body adjacent a side window (20) thereof and conduit means (16) interconnecting the vehicle heating system and the interior of the mirror housing (30, 32) characterised in that door means (26) are disposed intermediate the heating system and the mirror housing (30, 32) operative in one position to provide communication between the conduit means (16) and the interior of the housing (30, 32) and in another position to block communication therebetween and to provide communication between the conduit means (16) and the interior surface of the side window (22).

2. A vehicle as claimed in Claim 1 wherein the door means (26) includes portions operative in said one position to block communication between the mirror housing (30, 32) and the passenger compartment and in said other position to permit such communication.

3. A vehicle as claimed in Claim 1, including a plurality of slots (22) formed through portions of the vehicle door (12) adjacent the inner surface of the side window (20), first and second aligned apertures formed through the mirror housing (30, 32) and the vehicle door (12) respectively and wherein said door means includes a first door member (83) pivotally mounted at the first aperture and includes a portion engageable with the slots (22) and selectively movable between a first position wherein the first aperture is closed and the slots (22) and the conduit open end are in fluid communication and a second position wherein the first aperture is open and the slots (22) are closed, and a second door member (84) pivotally mounted adjacent the second aperture and selectively movable by control means (74) in unison with the first door member (83) between a first position, coinciding with said first door first portion wherein the second aperture is closed and a second position wherein said second aperture is open.

4. A vehicle as claimed in Claim 3 wherein the control means (74) comprises a selectively operable motor drive means carried in the mirror housing (30, 32) and having an axially displaceable output rod member (76) pivotally connected to the first door member (83), and a linking rod member (82) pivotally connected between the first and second door members (83, 84).

5. A vehicle as claimed in any one of the preceding claims including external door means (64) selectively operable to block or permit communication between the exterior of the vehicle and the interior of the housing (30, 32).

6. A vehicle as claimed in any one of Claims 1 to 4, including means (42) defining a flow path through the hollow housing around the mirror, an external aperture (28) formed through the mirror housing (30, 32) for communication with the outside, an external door means including an external door member (64) pivotally mounted adjacent the external aperture (28), flap means (54, 56) pivotally mounted adjacent the housing flow path defining means (42), and control means (68) for selectively operating the external door member (64) and the flap means (54, 56) in unison for movement between a ventilating position wherein the external door member (64) opens the external aperture (28) and the flap means (54, 56) closes the housing flow path defining means (42) and an air induction position wherein the external door member (64) closes the external aperture (28) and the flap means (54,56) opens the housing flowpath defining means (42).

7. A sail mirror assembly as claimed in Claim 6, wherein the external door control means (68) comprises a selectively motor drive means carried in the mirror housing (30,32) and having an axially displaceable output rod member (70) pivotally connected to the external door member (64).

## Patentansprüche

1. Personenfahrzeug mit einer einen Innenraum umgebenden Karosserie, einem System zur Beheizung des Innenraums, einer Außenspiegeleinheit (10) mit einem Gehäuse (30, 32), das einen Spiegel (18) trägt und an einer Außenfläche der Fahrzeugkarosserie in der Nähe eines Seitenfensters (20) befestigt ist, sowie Durchführungsvorrichtungen (16), un eine Verbindung zwischen dem Fahrzeugheizungssystem und dem Inneren des Spiegelgehäuses (30, 32) zu schaffen, dadurch gekennzeichnet, daß Türvorrichtungen (26) zwischen dem Heizungssystem und dem Spiegelgehäuse (30, 32) vorgesehen sind, die in einer Position für eine Verbindung zwischen den Durchführungsvorrichtungen (16) und dem Inneren des Gehäuses (30, 32) und in einer anderen Position dafür sorgen, daß diese Verbindung unterbrochen und statt dessen eine Verbindung zwischen den Durchführungsvorrichtungen (16) und der Innenfläche des Seitenfensters (22) hergestellt wird.

2. Fahrzeug gemäß Anspruch 1, wobei die Türvorrichtungen (26) Abschnitte umfassen, die in der genannten einen Position für eine Unterbrechung zwischen den Spiegelgehäuse (30, 32) und dem Innenraun und statt dessen in der genannten anderen Position für die Herstellung einer derartigen Verbindung sorgen.

3. Fahrzeug gemäß Anspruch 1, unfassend eine Vielzahl von Schlitzen (22), die in Abschnitten der Fahrzeugtür (12) in der Nähe der Innenfläche des Seitenfensters (20) ausgebildet sind, wobei erste und zweite Öffnungen mit entsprechender Ausrichtung durch das Spiegelgehäuse (30, 32) bzw. die Fahrzeugtür (12) verlaufen, und wobei die genannte Türvorrichtung ein erstes Türelement (83), das in schwenkbarer Ausführung an der ersten Öffnung montiert ist, und einen Abschnitt umfaßt, der in die Schlitze (22) eingreifen kann und sich wahlweise zwischen einer ersten Position, in der die erste Öffnung geschlossen und die Schlitze (22) und das offene Durchführungsende in Medienverbindung stehen, sowie einer zweiten Position, in der die erste Öffnung geöffnet ist und die Schlitze (22) geschlossen sind, bewegen läßt, sowie ein zweites Türelement (84) umfaßt, das in schwenkbarer Ausführung in der Nähe der zweiten Öffnung montiert ist und sich wahlweise über Steuervorrichtungen (74) gemeinsam mit dem ersten Türelement (83) zwischen einer ersten position, die mit der genannten ersten Türposition übereinstimmt, in der die zweite Öffnung geschlossen ist, und einer zweiten Position, in der die genannte zweite Öffnung geöffnet ist, bewegen läßt.

4. Fahrzeug gemäß Anspruch 3, wobei die Steuervorrichtung (74) eine wahlweise benutzbare Motorantriebsvorrichtung im Spiegelgehäuse (30, 32) umfaßt, wobei ein axial verschiebbares Stangenelement (76) in schwenkbarer Ausführung mit dem ersten Türelement (83) verbunden ist, und wobei ein Verbindungsstangenelement (82) in schwenkbarer Ausführung zwischen den ersten und zweiten Türelementen (83, 84) vorgesehen ist.

5. Fahrzeug gemäß irgendeinem der vorstehenden Ansprüche, umfassend äußere Türvorrichtungen (64), die wahlweise benutzt werden können, um eine Verbindung zwischen der Umgebung außerhalb des Fahrzeugs und dem Inneren des Gehäuses (30, 32) zu unterbinden oder herzustellen.

6. Fahrzeug gemäß irgendeinem der Ansprüche 1 bis 4, umfassend Vorrichtungen (42), die einen Strömungsweg durch das hohle Gehäuse, das den Spiegel umgibt, festlegen, eine äußere Öffnung (28), die durch das Spiegelgehäuse (30, 32) verläuft, um eine Verbindung zur Umgebung außerhalb des Fahrzeugs zu schaffen, eine äußere Türvorrichtung mit einem äußeren Türelement (64) in schwenkbarer Anordnung in der Nähe der äußeren Öffnung (28), Klappenvorrichtungen (54, 56) in schwenkbarer Anordnung in der Nähe der Vorrichtungen (42), die den Gehäuseströmungsweg festlegen, sowie Steuervorrichtungen (68), um das äußere Türelement (64) und die Klappenvorrichtungen (54, 56) gleichzeitig zwecks Bewegung zwischen einer Lüftungsposition, in der das äußere Türelement (64) die äußere Öffnung (28) öffnet und die Klappenvorrichtungen (54, 56) die Vorrichtungen (42), die den Gehäuseströmungsweg festlegen, schließen, und einer Lufteinströmungsposition, in der das äußere Türelement (64) die äußere Öffnung (28) schließt und die Klappenvorrichtungen (54, 56) die Vorrichtungen (42), die den Gehäuseströmungsweg festlegen, öffnen, betätigen zu können.

7. Außenspiegeleinheit gemäß Anspruch 6, wobei die äußeren Türsteuervorrichtungen (68) im Spiegelgehäuse (30, 32) eine wahlweise einsetzbare Motorantriebsvorrichtung umfassen, die ein axial verschiebbares Stangenelement (70) aufweist, das in schwenkbarer Ausführung mit dem äußeren Türelement (64) verbunden ist.

**Revendications**

1. Véhicule automobile comprenant une carrosserie qui renferme un habitacle, un système pour le chauffage de l'habitacle, un ensemble rétroviseur du type avant de portière (10) comportant un boîtier (30, 32) qui porte un miroir (18) et est fixé à une surface extérieure de la carrosserie du véhicule, dans une position adjacente à une fenêtre latérale (20) de cette carrosserie, et des moyens formant conduits (16) qui raccordent le système de chauffage du véhicule à l'intérieur du boîtier de rétroviseur (20, 32) caractérisé en ce que des moyens formant volet (26) sont disposés entre le système de chauffage et le boîtier (30, 32) du rétroviseur et qui ont pour effet, dans une première position, d'établir la communication entre les moyens formant conduits (16) et l'intérieur du boîtier (30, 32) et, dans une autre position, d'interrompre la communication entre ces éléments et d'établir la communication entre les moyens formant conduits (16) et la surface interne de la fenétre latérale (22).

2. Véhicule selon la revendication 1, dans lequel les moyens volets (26) comprennent des parties qui ont pour effet, dans ladite première position, d'interrompre la communication entre le boîtier (30, 32) du rétroviseur et l'habitacle et de permettre cette communication dans ladite autre position.

3. Véhicule selon la revendication 1, comprenant une pluralité de fentes (22) formées à travers des portions dela portière (12) du véhicule dans la région adjacente à la surface interne de la vitre latérale (20), une première et une deuxième ouvertures alignées formées respectivement à travers le boîtier (30, 32) du miroir et la porte (12) du véhicule, et dans lequel lesdits moyens formant volet comprennent un premier élément de volet (83) monté pivotant au droit de la première ouverture et une portion qui peut coopérer avec les fentes (22) et peut se déplacer sélectivement entre une première position, dans laquelle les fentes (22) et l'extrémité ouverte du conduit sont en communication pour le passage du fluide, et une deuxième position, dans laquelle la première ouverture est ouverte et les fentes (22) sont fermées, et un deuxième élément de volet (84) monté pivotant dans une position adjacente à la deuxième ouverture et qui peut être sélectivement déplacé par des moyens de commande (74), conjointement avec le premier élément de volet (83), entre une première position, qui coïncide avec ladite première position du premier volet, dans laquelle la deuxième ouverture est fermée, et une deuxième position dans laquelle ladite deuxième ouverture est ouverte.

4. Véhicule selon la revendication 3, dans lequel les moyens de commande (74) comprennent des moyens d'entraînement à moteur pouvant être actionnés sélectivement, montés dans le boîtier de rétroviseur (30, 32) et possédant un élément tige de sortie (76) pouvant être déplacé axialement, et articulé au premier élément de volet (83), et une biellette d'accouplement (82) articulée entre le premier et le deuxième éléments de volet (83, 84).

5. Véhicule selon l'une quelconque des revendications précédentes, comprenant des moyens formant volet extérieur (64) qui peuvent être sélectivement mis en action pour interrompre ou établir la communication entre l'extérieur du véhicule et l'intérieur du boîtier (30, 32).

6. Véhicule selon l'une quelconque des revendications 1 à 4, comprenant des moyens (42) qui définissent un passage d'écoulement à travers le boîtier creux, sur le tour du miroir, une ouverture extérieure (28) formée à travers le boîtier (30, 32) du miroir pour établir la communication avec l'extérieur, des moyens formant volet extérieur comprenant un élément volet extérieur (64) monté pivotant adjacent à l'ouverture extérieure (28), des moyens formant volet (54, 56) montés pivotants dans une position adjacente aux moyens (42) définissant le passage du boîtier et des moyens de commande (68) permettant d'actionner sélectivement l'élément volet extérieur (64) et les moyens formant volet (54, 56) à l'unisson pour les déplacer entre une position de ventilation, dans laquelle l'élément volet extérieur (64) ouvre l'ouverture extérieure (28) et les moyens formant volet (54, 56) ferment les moyens (42) définissant le passage du boîtier, et une position d'admission d'air dans laquelle l'élément volet extérieur (64) ferme l'ouverture extérieure (28) et les moyens trappe (54, 56) ouvrent les moyens (42) définissant le passage du boîtier.

7. Ensemble rétroviseur d'avant de portière selon la revendication 6, dans lequel les moyens de commande (68) de la porte extérieure comprennent des moyens d'entraînement à moteur sélectifs montés dans le boîtier (30, 32) du rétroviseur et possédant un élément tige de sortie (70) mobile en mouvement axial qui est articulé sur l'élément volet extérieur (64).

*Fig-1*

*Fig-2*

*Fig-3*

*Fig-4*

1

EP 0 111 479 B1

Fig-5

2

_Fig-6_

_Fig-7_

Fig-8